# EUROPEAN PATENT APPLICATION

(11) **EP 4 694 436 A1**
(43) Date of publication of application: **11.02.2026**
(21) Application number: 23929527.2
(22) Date of filing: 31.03.2023
(51) Int. Cl.: H04W 72/04

(54) **LINK RECOVERY METHOD AND APPARATUS**

(71) Applicant: Beijing Xiaomi Mobile Software Co., Ltd., Beijing 100085 (CN)
(72) Inventor: LI, Mingju, Beijing 100085 (CN)
(74) Representative: Gunzelmann, Rainer
(86) International application number: PCT/CN2023/085786
(87) International publication number: WO 2024/197944

(57) **Abstract**

The present application relates to the technical field of communications. Provided are a link recovery method and an apparatus. The method comprises: determining at least one qnew from a first candidate beam reference signal set and a second candidate beam reference signal set, wherein the qnew is used for indicating transmission using a beam that corresponds to the qnew; and determining a qnew that corresponds to a target channel and/or target reference signal. In the technical solution of the present application, in an M-TRP scenario, a terminal device is able to determine at least one qnew on the basis of a plurality of candidate beam reference signal sets, and determine a target channel and/or target reference signal by using the qnew, such that a beam failure recovery success rate based on TRP can be improved.

## Description

### TECHNICAL FIELD

The disclosure relates to the field of communication technology, in particular to a link recovery method and an apparatus.

### BACKGROUND

The multi transmission reception point (M-TRP) scenario includes the single-downlink control information (DCI) M-TRP scenario and the multi-DCI M-TRP scenario. In the case of multi-DCI (also referred to as M-DCI), each TRP sends, via its own DCI, the transmission resource indication related to its own TRP and the Transmission Configuration Indication (TCI) state. Each control resource set (CORESET) among multiple CORESETs is configured with a CORESET pool index (CORESETPoolIndex), and different CORESETPoolIndexes correspond to different TRPs. Therefore, the default failure detection resource set can be determined based on the TCI state of the CORESET included in the CORESETPoolIndex.

For each failure detection resource set, the reference signal identifier (qnew) of the target beam (i.e., new beam) may be determined from the corresponding candidate beam reference signal set, to inform the base station that the new beam corresponding to the qnew may be adopted for transmission. However, there is currently a lack of technical solutions on how to determine which channel and/or reference signal adopt which qnew.

### SUMMARY

The disclosure proposes a link recovery method and an apparatus, and provides a technical solution in which, in the case of M-TRP, a terminal may determine at least one qnew based on a plurality of candidate beam reference signal sets and determine that a target channel and/or reference signal adopts the qnew, which may improve a success rate of TRP -based beam failure recovery (BFR).

A first aspect embodiments of the disclosure, a link recovery method is provided, which is performed by a terminal. The method includes: determining at least one reference signal identifier (qnew) from a first candidate beam reference signal set and a second candidate beam reference signal set, in which the at least one qnew indicates to use a beam corresponding to the at least one qnew for transmission; and determining a qnew corresponding to a target channel and/or a qnew corresponding to a target reference signal.

In some embodiments of the disclosure, the method further includes: receiving first configuration information, in which the first configuration information is used to configure the first candidate beam reference signal set and the second candidate b eam reference signal set, and in which the first candidate beam reference signal set corresponds to a first failure detection resource set, and the second candidate beam reference signal set corresponds to a second failure detection resource set.

In some embodiments of the disclosure, the method further includes: receiving indication information, in which the indication information is used to determine a first unified transmission configuration indication (TCI) state and a second unified TCI state.

In some embodiments of the disclosure, at least one of the first unified TCI state or the second unified TCI state includes at least one of:
a joint TCI state; a downlink (DL) TCI state; or an uplink (UL) TCI state.

In some embodiments of the disclosure, the method further includes: determining the first failure detection resource set and the second failure detection resource set based on at least one of:
receiving second configuration information, in which the second configuration information indicates the first failure detection resource set and the second failure detection resource set; or
determining the first failure detection resource set based on a TCI state of a control resource set (CORESET) corresponding to a first CORESET pool index (CORESETPoolIndex), and determining the second failure detection resource set based on a TCI state of a CORESET corresponding to a second CORESETPoolIndex, in which at least two CORESETs are configured with different CORESETPoolIndexes.

In some embodiments of the disclosure, the first failure detection resource set includes a reference signal resource corresponding to the first unified TCI state, and the second failure detection resource set includes a reference signal resource corresponding to the second unified TCI state.

In some embodiments of the disclosure, determining at least one qnew from the first candidate beam reference signal set and the second candidate beam reference signal set includes at least one of:
in a case where a radio link quality corresponding to the first failure detection resource set is less than an out-of-sync threshold (Qout), and a layer 1 reference signal received power (L1-RSRP) of at least one first candidate reference signal in the first candidate beam reference signal set is greater than an in-sync threshold (Qin), determining a first qnew indicating the at least one first candidate reference signal; or
in a case where a radio link quality corresponding to the second failure detection resource set is less than a Qout, and an L1 -RSRP of at least one second candidate reference signal in the second candidate beam reference signal set is greater than a Qin, determining a second qnew indicating the at least one second candidate reference signal.

In some embodiments of the disclosure, the target channel includes at least one of:
a physical downlink control channel (PDCCH);
a physical downlink shared channel (PDSCH);
a physical uplink shared channel (PUSCH); or
a physical uplink control channel (PUCCH).

The target reference signal includes at least one of:
a demodulation reference signal (DMRS) of a PDCCH;
a DMRS of a PDSCH;
a DMRS of a PUCCH;
a DMRS of a PUSCH;
a sounding reference signal (SRS); or
a channel state information reference signal (CSI-RS).

In some embodiments of the disclosure, determining the qnew corresponding to the target channel and/or the qnew corresponding to the target reference signal includes: determining, according to a configuration signaling or a preset rule, the qnew corresponding to the target channel and/or the qnew corresponding to the target reference signal.

In some embodiments of the disclosure, determining, according to the preset rule, the qnew corresponding to the target channel and/or the qnew corresponding to the target reference signal includes:
in a case of the target channel being a first PDCCH and determining that the CORESET to which the first PDCCH belongs corresponds to the first CORESETPoolIndex or to the first unified TCI state, determining that the qnew corresponding to the first PDCCH is the first qnew, in which the first qnew corresponds to the first unified TCI state or the first CORESETPoolIndex;
in a case of the target channel being a second PDCCH and determining that the CORESET to which the second PDCCH belongs corresponds to the second CORESETPoolInd ex or to the second unified TCI state, determining that the qnew corresponding to the second PDCCH is the second qnew, in which the second qnew corresponds to the second unified TCI state or the second CORESETPoolIndex;
in a case where the target channel is a first channel and/or the target reference signal is a first reference signal, and the first channel and/or the first reference signal is scheduled by first downlink control information (DCI) carried in a first PDCCH, determining, based on a fact that the CORESET to which the first PDCCH belongs corresponds to the first CORESETPoolIndex or to the first unified TCI state, that the qnew corresponding to the first channel is the first qnew, and/or that the qnew corresponding to the first reference signal is the first qnew, in which the first qnew corresponds to the first unified TCI state or the first CORESETPoolIndex; and
in a case where the target channel is a second channel and/or the target reference signal is a second reference signal, and the second channel and/or the second reference signal is scheduled by second DCI carried in a second PDCCH, determining, based on a fact that the CORESET to which the second PDCCH belongs corresponds to the second CORESETPoolIndex or to the second unified TCI state, that the qnew corresponding to the second channel is the second qnew, and/or that the qnew corresponding to the second reference signal is the second qnew, in which the second qnew corresponds to the second unified TCI state or the second CORESETPoolIndex.

In some embodiments of the disclosure, determining, according to the configuration signaling, the qnew corresponding to the target channel and/or the qnew corresponding to the target reference signal includes: in a case where the target channel is a first channel and/or the target reference signal is a first reference signal, receiving a first configuration signaling, in which the first configuration signaling is used to determine that the first channel and/or the first reference signal adopts the first qnew; and in a case where the target channel is a second channel and/or the target reference signal is a second reference signal, receiving a second configuration signaling, in which the second configuration signaling is used to determine that the second channel and/or the second reference signal adopts the second qnew.

In some embodiments of the disclosure, determining the qnew corresponding to the target reference signal according to configuration signaling includes: in a case where the target reference signal is a first CSI-RS or a first SRS, and the first CSI-RS or the first SRS is configured to use neither the first unified TCI state nor the second unified TCI state, receiving third radio resource control (RRC) configuration signaling, in which the third RRC configuration signaling is used to determine that the qnew corresponding to the first CSI-RS or the qnew corresponding to the first SRS is the first qnew; and in a case where the target reference signal is a second CSI-RS or a second SRS, and the second CSI-RS or the second SRS is configured to use neither the first unified TCI state nor the second unified TCI state, receiving a fourth RRC configuration signaling, in which the fourth RRC configuration signaling is used to determine that the qnew corresponding to the second CSI-RS or the qnew corresponding to the second SRS is the second qnew.

In some embodiments of the disclosure, the method further includes: determining, based on the qnew, a pathloss during transmission of the target channel and/or a pathloss during transmission of the target reference signal, in which the target channel includes at least one of:
a PUCCH; or a PUSCH.

The target reference signal includes at least one of:
a DMRS of a PUCCH; a DMRS of a PUSCH; or an SRS.

In some embodiments of the disclosure, the method further includes: sending a scheduling request for beam failure recovery (BFR); and/or, sending a PUSCH, in which the PUSCH carries an uplink medium access control element (UL MAC CE), and the UL MAC CE indicates the qnew and at least one of:
an identifier (ID) of the first failure detection resource set;
an ID of the first candidate beam reference signal set;
the first CORESETPoolIndex;
an ID of the second failure detection resource set;
an ID of the second candidate beam reference signal set; or
the second CORESETPoolIndex.

In some embodiments of the disclosure, the indication information includes a MAC CE, and at least one unified TCI state indicated by the MAC CE corresponds to one code point indicated by a TCI state indication field carried in DCI.

In some embodiments of the disclosure, the indication information includes a MAC CE and DCI, in which the MAC CE indicates at least one unified TCI state respectively corresponding to a plurality of code points corresponding to a TCI state indication field carried in the DCI, and the TCI state indication field carried in the DCI indicates one code point among the plurality of code points.

It should be noted that the above embodiments may be implemented separately or in any combination, and the disclosure does not impose limitations thereon.

A second aspect embodiments of the disclosure, a link recovery method is provided, which is performed by a network device. The method includes: receiving a qnew sent by a terminal, in which the qnew is determined by the terminal from a first candidate beam reference signal set and a second candidate beam reference signal set and corresponds to a target channel and/or a target reference signal, and the qnew indicates to use a beam corresponding to the qnew for transmission.

In some embodiments of the disclosure, the method further includes: sending first configuration information, in which the first configuration information is used to configure the first candidate beam reference signal set and the second candidate beam reference signal set, and in which the first candidate beam reference signal set corresponds to a first failure detection resource set, and the second candidate beam reference signal set corresponds to a second failure detection resource set.

In some embodiments of the disclosure, the method further includes:sending indication information, in which the indication information is used for the terminal to determine a first unified TCI state and a second unified TCI state.

In some embodiments of the disclosure, the indication information includes a MAC CE, and at least one unified TCI state indicated by the MAC CE corresponds to one code point indicated by a TCI state indication field carried in DCI.

In some embodiments of the disclosure, the indication information includes a MAC CE and DCI, in which the MAC CE indicates at least one unified TCI state respectively corresponding to a plurality of code points corresponding to a TCI state indication field carried in the DCI, and the TCI state indication field carried in the DCI indicates one code point among the plurality of code points.

In some embodiments of the disclosure, at least one of the first unified TCI state or the second unified TCI state includes at least one of:
a joint TCI state; a DL TCI state; or an UL TCI state.

In some embodiments of the disclosure, the method further includes: sending second configuration information, in which the second configuration information indicates the first failure detection resource set and the second failure detection resource set.

In some embodiments of the disclosure, the first failure detection resource set includes a reference signal resource corresponding to the first unified TCI state, and the second failure detection resource set includes a reference signal resource corresponding to the second unified TCI state.

In some embodiments of the disclosure, the target channel includes at least one of:
a PDCCH; a PDSCH; a PUSCH; or a PUCCH.

The target reference signal includes at least one of:
a DMRS of a PDCCH; a DMRS of a PDSCH; a DMRS of a PUCCH; a DMRS of a PUSCH; an SRS; or a CSI-RS.

In some embodiments of the disclosure, the target channel is a first channel, and/or the target reference signal is a first reference signal, and the method further includes: sending a first configuration signaling, in which the first configuration signaling is used to configure the first channel to be associated with at least one of a first CORESETPoolIndex or a first unified TCI state, and/or to configured the first reference signal to be associated with at least one of the first CORESETPoolIndex or the first unified TCI state.

In some embodiments of the disclosure, the target channel is a second channel, and/or the target reference signal is a second reference signal, and the method further includes: sending a second configuration signaling, in which the second configuration signaling is used to configure the second channel to be associated with at least one of a second CORESETPoolIndex or a second unified TCI state, and/or to configured the second reference signal to be associated with at least one of the second CORESETPoolIndex or the second unified TCI state.

In some embodiments of the disclosure, the target reference signal is a first CSI-RS or a first SRS, and the first CSI-RS or the first SRS is configured to use neither the first unified TCI state nor the second unified TCI state, and the method further includes: sending a third RRC configuration signaling, in which the third RRC configuration signaling is used to configure the first CSI-RS or the first SRS to be associated with at least one of a first CORESETPoolIndex, a first failure detection resource set, or the first candidate beam reference signal set.

In some embodiments of the disclosure, the target reference signal is a second CSI-RS or a second SRS, and the second CSI-RS or the second SRS is configured to use neither the first unified TCI state nor the second unified TCI state, and the method further includes: sending a fourth configuration signaling, in which the fourth configuration signaling is used to configure the second CSI-RS or the second SRS to be associated with at least one of a second CORESETPoolIndex, a second failure detection resource set, or the second candidate beam reference signal set.

In some embodiments of the disclosure, the method further includes: receiving a scheduling request for BFR; and/or, receiving a PUSCH, in which the PUSCH carries an UL MAC CE, and the UL MAC CE indicates the qnew and at least one of:

an ID of a first failure detection resource set; an ID of the first candidate beam reference signal set; a first CORESETPoolIndex; an ID of a second failure detection resource set; an ID of the second candidate beam reference signal set; or a second CORESETPoolIndex.

It should be noted that the above embodiments may be implemented separately or in any combination, and the disclosure does not impose limitations thereon.

A third aspect embodiments of the disclosure, a link recovery apparatus is provided, which is applied to a terminal. The apparatus includes: a first communication module, configured to determine at least one qnew from a first candidate beam reference signal set and a second candidate beam reference signal set, in which the at least one qnew indicates to use a beam corresponding to the at least one qnew for transmission; and configured to determine a qnew corresponding to a target channel and/or a qnew corresponding to a target reference signal.

A fourth aspect embodiments of the disclosure, a link recovery apparatus is provided, which is applied to a network device. The apparatus includes: a second communication module, configured to receive a qnew sent by a terminal, in which the qnew is determined by the terminal from a first candidate beam reference signal set and a second candidate beam reference signal set and corresponds to a target channel and/or a target reference signal, and the qnew indicates to use a beam corresponding to the qnew for transmission.

A fifth aspect embodiments of the disclosure, a communication device is provide, including: a transceiver; a memory; and a processor connected to the transceiver and the memory respectively, in which the processor is configured to control the transceiver to transmit and receive a wireless signal by executing computer-executable instructions on the memory, and to implement the method according to the first aspect or the second aspect.

A sixth aspect embodiments of the disclosure, a computer storage medium is provided. The computer storage medium stores computer-executable instructions which, when executed by a processor, causes the method according to the first aspect or the second aspect to be implemented.

The embodiments of the disclosure provide the link recovery method and apparatus. The terminal determines at least one qnew from the first candidate beam reference signal set and the second candidate beam reference signal set, the qnew indicates to use the beam corresponding to the qnew for transmission; and determines the qnew corresponding to the target channel and/or the qnew corresponding to the target reference signal. The embodiments of the disclosure provides a technical solution in which, in the case of M-TRP, the terminal may determine at least one qnew based on a plurality of candidate beam reference signal sets and determine that the target channel and/or the target reference signal adopts the qnew, which may improve the success rate of TRP-based BFR.

Additional aspects and advantages of the disclosure will be partially set forth in the following description, and partially will become apparent from the following description, or be learned through the practice of the disclosure.

### BRIEF DESCRIPTION OF THE DRAWINGS

The above-mentioned and/or additional aspects and advantages of the disclosure will become apparent and easily understandable from the following description of embodiments in conjunction with the accompanying drawings.
FIG. 1 is a schematic diagram of a communication system according to an embodiment of the disclosure.
FIG. 2 is a schematic flowchart of a link recovery method according to an embodiment of the disclosure.
FIG. 3 is a schematic flowchart of a link recovery method according to an embodiment of the disclosure.
FIG. 4 is a schematic flowchart of a link recovery method according to an embodiment of the disclosure.
FIG. 5 is a block diagram of a link recovery apparatus according to an embodiment of the disclosure.
FIG. 6 is a block diagram of a link recovery apparatus according to an embodiment of the disclosure.
FIG. 7 is a schematic diagram of a communication apparatus according to an embodiment of the disclosure.
FIG. 8 is a schematic diagram of a chip according to an embodiment of the disclosure.

### DETAILED DESCRIPTION

Reference will now be made in detail to embodiments, examples of which are illustrated in the accompanying drawings. The same or similar reference numerals represent the same or similar elements or elements with the same or similar functions throughout. The embodiments described below with reference to the accompanying drawings are exemplary and intended to explain the disclosure, and shall not be construed as limiting the disclosure. It should be noted that the embodiments of the disclosure and the features in the embodiments may be combined with each other without conflict.

The terms used in the embodiments of the disclosure are only for the purpose of describing specific embodiments, and are not intended to limit the embodiments of the disclosure. The singular forms of "a" and "the" used in the embodiments and the attached claims of the disclosure are also intended to include plural forms, unless the context clearly indicates other meanings. It is understandable that the term "and/or" as used herein refers to and includes any or all possible combinations of one or more associated listed items.

It is understandable that although the terms "first", "second" and "third" may be used in the embodiments of the disclosure to describe various types of information, the information should not be limited to these terms. These terms are only used to distinguish the same type of information from each other. For example, without departing from the scope of the embodiments of the disclosure, the first information may also be referred to as the second information, and similarly, the second information may also be referred to as the first information. Depending on the context, the term "if" as used herein may be interpreted as "when", "while" or "in response to determining".

For ease of understanding, the terms involved in the embodiments are first introduced.
1. Transmission and reception point (TRP): corresponding to a serving cell or a neighboring cell of a terminal.
2. Control resource set (CORESET): being a configuration resource for a PDCCH to transmit a DCI signaling.
3. CORESET pool index (CORESETPoolIndex): one CORESETPoolIndex value corresponds to one or more CORESETs, and each CORESETPoolIndex corresponds to one TRP. That is, CORESETs corresponding to different CORESETPoolIndex values are used for the PDCCHs of different TRPs.
4. Transmission configuration indication (TCI): used to inform the user which receiving beam, consistent with a synchronization signal block (SSB) or CSI-RS sent by a base station, used for receiving PDCCH/PDSCH/CSI-RS; or used to inform the user of which reference signal (e.g., SRS or CSI-RS) (for transmission/reception) shares the same transmit beam as that used for transmitting PUCCH/PUSCH/SRS.
5. Reference signal identifier (qnew) of a target beam (i.e., new beam): in BFR, the qnew is determined from a candidate beam reference signal set, and the qnew is used to inform a network device (e.g., base station) that the new beam corresponding to the qnew may be adopted for transmission.

In new radio (NR), especially when a communication frequency band falls within frequency range 2 (FR2), a high-frequency channel experiences rapid attenuation. To ensure coverage, beam-based transmission and reception are required.

For the reception of the PDCCH, the base station configures a TCI state for the CORESET to indicate the quasi-colocation (QCL) information of the PDCCH, in which the QCL information includes QCL Type D, which refers to a reception spatial parameter, commonly known as a beam. After the terminal obtains the TCI state of the CORESET, the current TCI state may become inappropriate due to the movement of the terminal. Therefore, the terminal needs to be configured with a failure detection resource. When a failure detection is performed for a cell specific case, one failure detection resource set q0 is configured for one bandwidth part (BWP) of one serving cell. When the failure detection is performed for a TRP specific case, one failure detection resource set (q0, 0) and another failure detection resource set (q0, 1) are configured for one BWP of one serving cell. When the base station does not configure q0 for the terminal, the terminal needs to determine the resource for the failure detection from the CSI-RSs corresponding to the TCI states of all CORESETs. When the terminal is not configured with (q0,0) and (q0,1), the terminal first determines two groups of CORESETs based on the CORESETPoolIndex, and then determines the resources for the failure detection for each group from the CSI-RSs corresponding to the TCI states of one or more CORESETs in each group of CORESETs.

However, in the case of M-TRP, including the M-TRP based on M-DCI, each TRP transmits its own TRP-related transmission resource indication and TCI state via the TRP's own DCI. Each CORESET among a plurality of CORESETs is configured with one CORESETPoolIndex, and different CORESETPoolIndexes correspond to different TRPs. Therefore, for the M-DCI scenario of the M-TRP, the default failure detection resource set may be determined based on the CORESETs included in the CORESETPoolIndex.

In the case of M-TRP, after the qnew is determined from the corresponding candidate beam reference signal set for each failure detection resource set, there is currently a lack of technical solutions for determining which channel or reference signal should adopt this qnew.

To address this, the disclosure proposes a link recovery method and apparatus. In the case of M-TRP, a terminal may determine at least one qnew based on a plurality of candidate beam reference signal sets, and determine a technical solution in which a target channel and/or a reference signal to adopt the qnew.

The link recovery method and the apparatus provided in this disclosure are described in detail below with reference to the accompanying drawings.

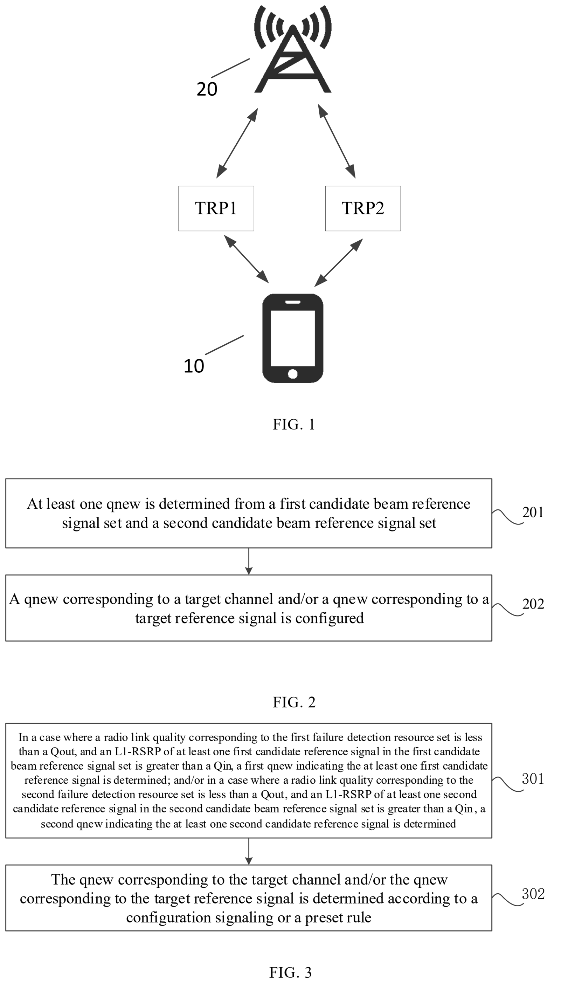

FIG. 1 is a schematic diagram of a communication system according to an embodiment of the disclosure. The communication system may include: a terminal 10 and a network device 20.

There may be one or more terminals 10, and one or more terminals 10 may be distributed in a cell managed by each network device 20. The terminal 10 may include various handheld devices with wireless communication functions, vehicle-mounted devices, wearable devices, computing devices, or other processing devices connected to a wireless modem, as well as various forms of user equipment (UE), mobile station (MS), and so on. For convenience of description, in the embodiments of the disclosure, the aforementioned devices are collectively referred to as terminals.

The network device 20 is an apparatus deployed in an access network to provide wireless communication functions for the terminal 10. The network device 20 may include various forms of macro base stations, micro base stations, relay stations, and access points. In systems using different wireless access technologies, the name of a device with network device functions may vary; for example, in a 5th generation mobile communication technology (5G) NR system, the device is called a next generation node B (gNodeB or gNB). With the evolution of communication technologies, the name "network device" may change. For convenience of description, in this embodiment, the aforementioned apparatuses that provide wireless communication functions for the terminal 10 are collectively referred to as network devices. A connection may be established between the network device 20 and the terminal 10 via an air interface, so that the network device 20 and the terminal 10 may be communicate with each other (including interaction of signaling and data) via this connection. There may be a plurality of network devices 20, and two adjacent network devices 20 may also communicate with each other in a wired or wireless manner. The terminal 10 may switch between different network devices 20, that is, establish connections with different network devices 20.

In some examples, the network device 20 may be configured with at least two TRPs. As shown in FIG. 1, the network device 20 has two corresponding TRPs, and the network device 20 may use these two TRPs to provide services for the terminal 10 (including using these two TRPs to send the PDCCH to the terminal 10). When the two TRPs (i.e., M-TRP) are used for PDCCH transmission, the M-TRP-based PDCCH transmission correspond to one or more CORESETs. The TCI states of receiving beams corresponding to each CORESET may be the same or different, and there may be one or more such TCI states. The TCI state is used to indicate a reference signal resource identifier corresponding to a beam.

FIG. 2 is a schematic flowchart of a link recovery method according to an embodiment of the disclosure. As shown in FIG. 2, the method is applied to and performed by a terminal, and may include the following steps. It should be noted that the various embodiments in this disclosure may be executed separately or in any combination.

At step 201: at least one qnew is determined from a first candidate beam reference signal set and a second candidate beam reference signal set.

The at least one qnew may indicate to uses a beam corresponding to the at least one qnew for transmission. The beam may be referred to as at least one of a TCI state, spatial relation information, and a QCL parameter.

When a failure detection is performed for a TRP specific case, one BWP for one serving cell may include two TRPs, where each TRP corresponds to one failure detection resource set, and each failure detection resource set corresponds to one candidate beam reference signal set. That is, the two TRPs correspond to the first candidate beam reference signal set and the second candidate beam reference signal set respectively. In this embodiment, during the BFR, at least one target qnew may be determined from the two sets (i.e., the first candidate beam reference signal set and the second candidate beam reference signal set), which is used to inform the network device that a target beam (i.e., new beam) may be adopted for transmission.

In some examples, the method of this embodiment may further include: the terminal receives first configuration information, in which the first configuration information may be used to configure the first candidate beam reference signal set and the second candidate beam reference signal set. The first candidate beam reference signal set corresponds to a first failure detection resource set, and the second candidate beam reference signal set corresponds to a second failure detection resource set.

For example, the terminal may receive the first configuration information, where the first configuration information is used to configure the first candidate beam reference signal set and the second candidate beam reference signal set, and different CORESETs among at least one CORESET of the terminal are configured with different CORESETPoolIndexes. It can be understood that "different CORESETs among at least one CORESET are configured with different CORESETPoolIndexes" refers to that for an M-TRP scenario corresponding to M-DCI, different TRPs correspond to different CORESETPoolIndexes.

In some examples, the method of this embodiment may further include: the terminal receives indication information, in which the indication information is used to determine a first unified TCI state and a second unified TCI state. For example, the first unified TCI state and the second unified TCI state may be determined with the same indication information, or the first unified TCI state and the second unified TCI state may be determined respectively with different indication information. This embodiment does not impose limitations on this.

A unified TCI state is applicable to channels including a PDCCH, a PDSCH, a PUCCH, and a PUSCH, and applicable to reference signals including a DMRS of a PDCCH, a DMRS of a PDSCH, a DMRS of a PUCCH, a DMRS of a PUSCH, a CSI-RS, and an SRS. As for whether these channels/reference signals adopt the first unified TCI state, the second unified TCI state, both, or neither, it is configured or indicated for each of these channels/reference signals by using additional information respectively.

For example, the indication information received by the terminal may include a MAC CE, and at least one unified TCI state indicated by the MAC CE corresponds to one code point indicated by a TCI state indication field carried in DCI. Alternatively, the indication information received by the terminal may further include a MAC CE and DCI, in which the MAC CE indicates at least one unified TCI state respectively corresponding to a plurality of code points corresponding to a TCI state indication field carried in the DCI, and the TCI state indication field carried in the DCI indicates one code point among the plurality of code points.

For example, at least one of the first unified TCI state or the second unified TCI state includes at least one of:
a joint TCI state; a downlink (DL) TCI state; or an uplink (UL) TCI state. For instance, the first unified TCI state includes the joint TCI state, or the first unified TCI state includes the DL TCI state, or the first unified TCI state includes the UL TCI state, or the first unified TCI state includes the DL TCI state and the UL TCI state. For another instance, the second unified TCI state includes the joint TCI state, or the second unified TCI state includes the DL TCI state, or the second unified TCI state includes the UL TCI state, or the second unified TCI state includes the DL TCI state and the UL TCI state.

In some examples, the process of determining the first failure detection resource set and the second failure detection resource set may include: the terminal receiving second configuration information, in which the second configuration information may indicate the first failure detection resource set and the second failure detection resource set, and thus the two failure detection resource sets may be determined with the second configuration information; and/or, determining the first failure detection resource set based on a TCI state of a CORESET corresponding to a first CORESETPoolIndex; determining the second failure detection resource set based on a TCI state of a CORESET corresponding to a second CORESETPoolIndex, in which at least two CORESETs are configured with different CORESETPoolIndexes, i.e., corresponding to the M-TRP scenario of M-DCI. For example, the terminal determines the first failure detection resource set based on the TCI state corresponding to one or more CORESETs (some of these CORESETs may adopt the first unified TCI state, while others may not) in the first CORESETPoolIndex; and determines the second failure detection resource set based on the TCI state corresponding to one or more CORESETs (some of these CORESE Ts may adopt the second unified TCI state, while others may not) in the second CORESETPoolIndex.

Further, in some examples, the first failure detection resource set and the second failure detection resource set may be determined based on the first unified TCI state and the second unified TCI state respectively. For instance, the first failure detection resource set may include one or more reference signal resource corresponding to the first unified TCI state, and the second failure detection resource set may include one or more reference signal resource corresponding to the second unified TCI state. The reference signal resource may be the reference signal resource corresponding to QCL Type D indicated by the TCI state.

For example, for this embodiment, the step 201 may specifically include: determining at least one target qnew from the first candidate beam reference signal set and the second candidate beam reference signal set based on a radio link quality corresponding to the first failure detection resource set, an L1-RSRP(s) of one or more candidate reference signals in the first candidate beam reference signal set, as well as a radio link quality corresponding to the second failure detection resource set and an L1-RSRP(s) of one or more candidate reference signals in the second candidate beam reference signal set.

At step 202: a qnew corresponding to a target channel and/or a qnew corresponding to a target reference signal is configured.

In some examples, the target channel may include at least one of:
a PDCCH; a PDSCH; a PUSCH; or a PUCCH.

The target reference signal may include at least one of:
a DMRS of a PDCCH; a DMRS of a PDSCH; a DMRS of a PUSCH; a DMRS of a PUCCH; an SRS; or a CSI-RS.

This embodiment provides a technical solution in which, in the case of M-TRP, the terminal may determine at least one qnew based on a plurality of candidate beam reference signal sets and determine that the target channel and/or the target reference signal adopts the qnew, which may improve a success rate of TRP-based BFR.

FIG. 3 is a schematic flowchart of a link recovery method according to an embodiment of the disclosure. Based on the embodiment shown in FIG. 2, as illustrated in FIG. 3, the method is applied to and performed by a terminal, and may include the following steps. It should be noted that the various embodiments in this disclosure may be executed separately or in any combination.

At step 301: in a case where a radio link quality corresponding to the first failure detection resource set is less than a Qout, and an L1-RSRP of at least one first candidate reference signal in the first candidate beam reference signal set is greater than a Qin, a first qnew indicating the at least one first candidate reference signal is determined; and/or in a case where a radio link quality corresponding to the second failure detection resource set is less than a Qout, and an L1 - RSRP of at least one second candidate reference signal in the second candidate beam reference signal set is greater than a Qin, a second qnew indicating the at least one second candidate reference signal is determined.

For example, in a case where the radio link quality of the reference signal in the first failure detection resource set is less than the Qout and there are two candidate reference signals (A and B) in the first candidate beam reference signal set whose L1-RSRP is greater than the Qin, it is determined that the first qnew (the qnew determined from the first candidate beam reference signal set) indicates these two candidate reference signals (A and B), i.e., the first qnew is the reference signal identifier corresponding to these two candidate reference signals (A and B); and/or in a case where the radio link quality of the reference signal in the second failure detection resource set is less than the Qout and there is one candidate reference signal C in the second candidate beam reference signal set whose L1-RSRP is greater than the Qin, it is determined that the second qnew (the qnew determined from the second candidate beam reference signal set) indicates this candidate reference signal C, i.e., the second qnew is the reference signal identifier corresponding to this candidate reference signal C.

In some examples, the method of this embodiment may further include: the terminal sending a scheduling request for the BFR; and/or the terminal sending a PUSCH, which is received by the corresponding network device. The PUSCH carries an UL MAC CE, in which the UL MAC CE indicates the target qnew (carried if the target qnew is found, otherwise not carried) and at least one of:
an identifier (ID) of the first failure detection resource set; an ID of the first candidate beam reference signal set; the first CORESETPoolIndex; an ID of the second failure detection resource set; an ID of the second candidate beam reference signal set; or the second CORESETPoolIndex.

For example, the terminal and the network device synchronously update the first unified TCI state to the first qnew, i.e., update the first unified TCI state to the first qnew after a first time; and/or the terminal and the network device synchronously update the second unified TCI state to the second qnew, i.e., update the second unified TCI state to the second qnew after the first time. The terminal determines, based on a process shown in step 302 below, that the target channel adopts the first unified TCI state and/or the second unified TCI state, and/or the target reference signal adopts the first unified TCI state and/or the second unified TCI state, i.e., determines the qnew corresponding to the target channel and/or the qnew corresponding to the target reference signal.

At step 302: the qnew corresponding to the target channel and/or the qnew corresponding to the target reference signal is determined according to a configuration signaling or a preset rule.

The configuration signaling may be a RRC configuration signaling or other types of signaling, which is not limited in this embodiment.

In some examples, the specific process of step 302 may be determined in the following cases.

In a case A: in a case of the target channel being a first PDCCH and determining that the CORESET to which the first PDCCH belongs corresponds to the first CORESETPoolIndex or to the first unified TCI state, it is determined that the qnew corresponding to the first PDCCH is the first qnew, where the first qnew corresponds to the first unified TCI state or the first CORESETPoolIndex. That the first qnew corresponds to the first unified TCI state or the first CORESETPoolIndex means that the first qnew is used to replace the first unified TCI state, or the first qnew is used for transmission of the target channel corresponding to the first CORESETPoolIndex. This is because the first qnew is determined from the first candidate beam reference signal set, and the first failure detection resource set corresponds to the first CORESETPoolIndex. For example, the first failure detection resource set includes the reference signal resource corresponding to the TCI state of the CORESET in the first CORESETPoolIndex.

For example, for the CORESET (which may correspond to the PDCCH), the qnew corresponding to the PDCCH is determined based on the CORESETPoolIndex. For instance, the first CORESETPoolIndex is associated with at least one of the first failure detection resource set, the first candidate beam reference signal set, or the first unified TCI state. It is determined that the qnew corresponding to the first PDCCH is the first qnew based on that fact that the CORESET to which the first PDCCH belongs corresponds to the first CORESETPoolIndex or to the first unified TCI state.

In a case B: in a case of the target channel being a second PDCCH and determining that the CORESET to which the second PDCCH belongs corresponds to the second CORESETPoolIndex or to the second unified TCI state, it is determined that the qnew corresponding to the second PDCCH is the second qnew, where the second qnew corresponds to the second unified TCI state or the second CORESETPoolIndex. That the second qnew corresponds to the second unified TCI state or the second CORESETPoolIndex means that the second qnew is used to replace the second unified TCI state, or the second qnew is used for transmission of the target channel corresponding to the second CORESETPoolIndex. This is because the second qnew is determined from the second candidate beam reference signal set, and the second failure detection resource set corresponds to the second CORESETPoolIndex. For example, the second failure detection resource set includes the reference signal resource corresponding to the TCI state of the CORESET in the second CORESETPoolIndex.

For example, the second CORESETPoolIndex is associated with at least one of the second failure detection resource set, the second candidate beam reference signal set, or the second unified TCI state. It is determined that the qnew corresponding to the second PDCCH is the second qnew based on that fact that the CORESET to which the second PDCCH belongs corresponds to the second CORESETPoolIndex or to the second unified TCI state.

In a case C: in a case where the target channel is a first channel and/or the target reference signal is a first reference signal, and the first channel and/or the first reference signal is scheduled by a first DCI carried in a first PDCCH, it is determined, based on a fact that the CORESET to which the first PDCCH belongs corresponds to the first CORESETPoolIndex or to the first unified TCI state, that the qnew corresponding to the first channel is the first qnew, and/or that the qnew corresponding to the first reference signal is the first qnew, in which the first qnew corresponds to the first unified TCI state or the first CORESETPoolIndex. That the first qnew corresponds to the first unified TCI state or the first CORESETPoolIndex means that the first qnew is used to replace the first unified TCI state, or the first qnew is used for transmission of the target channel and/or the target reference signal corresponding to the first CORESETPoolIndex. This is because the first qnew is determined from the first candidate beam reference signal set, and the first failure detection resource set corresponds to the first CORESETPoolIndex. For example, the first failure detection resource set includes the reference signal resource corresponding to the TCI state of the CORESET in the first CORESETPoolIndex.

For example, the first channel may include at least one of a first PDSCH, a first PUSCH, or a first PUCCH, and the first target reference signal may include at least one of a DMRS of the first PDCCH, a DMRS of the first PUSCH, a DMRS of the first PUCCH, a first CSI-RS, or a first SRS. In a case where one or more of these channels/reference signals are scheduled by the first DCI, it is determined, based on the fact that the CORESET to which the first PDCCH belongs corresponds to the first CORESETPoolIndex or to the first unified TCI state, that the qnew for one or more of these channels/reference signals is the first qnew obtained in step 301.

In a case D: in a case where the target channel is a second channel and/or the target reference signal is a second reference signal, and the second channel and/or the second reference signal is scheduled by a second DCI carried in a second PDCCH, it is determined, based on a fact that the CORESET to which the second PDCCH belongs corresponds to the second CORESETPoolIndex or to the second unified TCI state, that the qnew corresponding to the second channel is the second qnew, and/or that the qnew corresponding to the second reference signal is the second qnew, in which the second qnew corresponds to the second unified TCI state or the second CORESETPoolIndex. That the second qnew corresponds to the second unified TCI state or the second CORESETPoolIndex means that the second qnew is used to replace the second unified TCI state, or the second qnew is used for transmission of the target channel and/or the target reference signal corresponding to the second CORESETPoolIndex. This is because the second qnew is determined from the second candidate beam reference signal set, and the second failure detection resource set corresponds to the second CORESETPoolIndex. For example, the second failure detection resource set includes the reference signal resource corresponding to the TCI state of the CORESET in the second CORESETPoolIndex.

For example, the second channel may include at least one of a second PDSCH, a second PUSCH, or a second PUCCH, and the second target reference signal may include at least one of a DMRS of the second PDCCH, a DMRS of the second PUSCH, a DMRS of the second PUCCH, a second CSI-RS, or a second SRS. In a case where one or more of these channels/reference signals are scheduled by the second DCI, it is determined, based on the fact that the CORESET to which the second PDCCH belongs corresponds to the second CORESETPoolIndex or to the second unified TCI state, that the qnew for one or more of these channels/reference signals is the second qnew obtained in step 301.

Further, in some examples, step 302 may specifically include: in a case where the target channel is the first channel and/or the target reference signal is the first reference signal, receiving a first configuration signaling, such as a first RRC configuration signaling, where the first configuration signaling is used to determine that the first channel and/or the first reference signal adopts the first qnew. For example, in a case where the first PDSCH, the first PUSCH, the first PUCCH, the DMRS of the first PDCCH, the DMRS of the first PUSCH, the DMRS of the first PUCCH, the first CSI-RS and the first SRS etc., do not need to be scheduled by the first DCI, it may be determined, based on RRC configuration (such as configuring one or more of these channels/reference signals to correspond to the first CORESETPoolIndex or to the first unified TCI state), that one or more of these channels/reference signals adopt the first qnew.

In a case where the target channel is the second channel and/or the target reference signal is the second reference signal, receiving a second configuration signaling, such as a second RRC configuration signaling, where the second configuration signaling is used to determine that the second channel and/or the second reference signal adopts the second qnew. For example, in a case where the second PDSCH, the second PUSCH, the second PUCCH, the DMRS of the second PDCCH, the DMRS of the second PUSCH, the DMRS of the second PUCCH, the second CSI-RS and the second SRS etc., do not need to be scheduled by the second DCI, it may be determined, based on RRC configuration (such as configuring one or more of these channels/reference signals to correspond to the second CORESETPoolIndex or to the second unified TCI state), that one or more of these channels/reference signals adopt the second qnew.

In some examples, the method of this embodiment may further include: determining, based on the qnew, a pathloss during transmission of the target channel and/or a pathloss during transmission of the target reference signal, where the target channel includes at least one of:
a PUCCH; or a PUSCH.

The target reference signal includes at least one of:
a DMRS of a PUCCH; a DMRS of a PUSCH; or an SRS.

For example, for the first PUCCH, the first PUSCH, and the first SRS, in addition to adopting a QCL Type parameter assumption of the first qnew, the corresponding pathloss may also be determined based on the first qnew. For the second PUCCH, the second PUSCH, and the second SRS, in addition to adopting the QCL Type parameter assumption of the second qnew, the corresponding pathloss may also be determined based on the second qnew.

In some examples, step 302 may specifically further include: in a case where the target reference signal is the first CSI-RS or the first SRS, and the target reference signal (the first CSI-RS or the first SRS) is configured to use neither the first unified TCI state nor the second unified TCI state, receiving a third configuration signaling, such as a third RRC configuration signaling, in which the third configuration signaling may be used to determine that the qnew corresponding to the first CSI-RS or the qnew corresponding to the first SRS is the first qnew; and in a case where the target reference signal is the second CSI-RS or the second SRS, and the target reference signal (the second CSI-RS or the second SRS) is configured to use neither the first unified TCI state nor the second unified TCI state, receiving a fourth configuration signaling, such as a fourth RRC configuration signaling, in which the fourth configuration signaling is used to determine that the qnew corresponding to the second CSI-RS or the qnew corresponding to the second SRS is the second qnew.

For example, in this embodiment, for CSI-RS and SRS that do not adopt the unified TCI state, the corresponding target qnew may be determined based on a RRC configuration or a default rule. For some CORESETs, in a case where the RRC configures them not to use any unified TCI state but configures their corresponding CORESETPoolIndex, then the CORESET uses the qnew corresponding to the CORESETPoolIndex. For the first CSI-RS and the first SRS, in a case where neither the first CSI-RS nor the first SRS is not configured to use the unified TCI state (not configured to use the first unified TCI state and not configured to use the second unified TCI state), the first CSI-RS/first SRS is configured to be associated with the first failure detection resource set, or with the first candidate beam reference signal set, or with the first CORESETPoolIndex, thereby determining that the target qnew for the first CSI-RS/first SRS is the first qnew. Correspondingly, for the second CSI-RS and the second SRS, in a case where neither the second CSI-RS nor the second SRS is not configured to use theunified TCI state (not configured to use the first unified TCI state and not configured to use the second unified TCI state), the second CSI-RS/second SRS is configured to be associated with the second failure detection resource set, or with the second candidate beam reference signal set, or with the second CORESETPoolIndex, thereby determining that the target qnew for the second CSI-RS/second SRS is the second qnew.

This embodiment provides a technical solution in which, in the case of M-TRP, the terminal may determine at least one target qnew based on a plurality of candidate beam reference signal sets and determine that the target channel and/or the reference signal adopts the target qnew. It may be determined that channels (the PDSCH, the PUCCH and the PUSCH)/signals (the DMRS of the PDSCH, the DMRS of the PUCCH, the DMRS of the PUSCH, the CSI-RS, and the SRS) other than the CORESET (corresponding to the PDCCH and the DMRS of the PDCCH) adopt the target qnew, which may improve a success rate of TRP-based BFR.

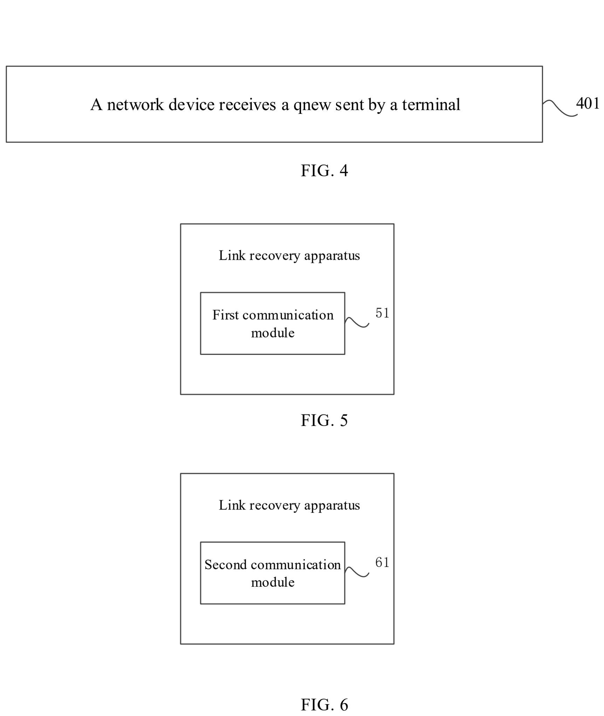

FIG. 4 is a schematic flowchart of a link recovery method according to an embodiment of the disclosure. The method is applied to and performed by a network device, and may include the following steps. It should be noted that the various embodiments in this disclosure may be executed separately or in any combination.

At step 401: a network device receives a qnew sent by a terminal.

The qnew may be the qnew corresponding to a target channel and/or a target reference signal, and the qnew is determined by the terminal from a first candidate beam reference signal set and a second candidate beam reference signal set according to an RRC configuration signaling or a preset rule. Thee qnew indicates to use a beam corresponding to the qnew for transmission. The beam may be referred to as at least one of a TCI state, spatial relation information, and a QCL parameter.

In some example, the method of the embodiment further includes: the network device sending first configuration information, in which the first configuration information is used to configure the first candidate beam reference signal set and the second candidate beam reference signal set. The first candidate beam reference signal set corresponds to a first failure detection resource set, and the second candidate beam reference signal set corresponds to a second failure detection resource set.

For example, the network device sending first configuration information, in which the first configuration information is used to configure the first candidate beam reference signal set and the second candidate beam reference signal set. Different CORESETs among at least one CORESET of the terminal are configured with different CORESETPoolIndexes. It can be understood that "different CORESETs among at least one CORESET are configured with different CORESETPoolIndexes" refers to that for an M-TRP scenario corresponding to M-DCI, different TRPs correspond to different CORESETPoolIndexes.

In some examples, the method of this embodiment may further include: the network device sending indication information, in which the indication information may be used for the terminal to determine a first unified TCI state and a second unified TCI state.

For example, the indication information sent by the network device may include a MAC CE, and at least one unified TCI state indicated by the MAC CE corresponds to one code point indicated by a TCI state indication field carried in DCI. Alternatively, the indication information sent by the network device may further include a MAC CE and DCI, in which the MAC CE indicates at least one unified TCI state respectively corresponding to a plurality of code points corresponding to a TCI state indication field carried in the DCI, and the TCI state indication field carried in the DCI indicates one code point among the plurality of code points.

For example, at least one of the first unified TCI state or the second unified TCI state includes at least one of:
a joint TCI state; a downlink (DL) TCI state; or an uplink (UL) TCI state. For instance, the first unified TCI state includes the joint TCI state, or the first unified TCI state includes the DL TCI state, or the first unified TCI state includes the UL TCI state, or the first unified TCI state includes the DL TCI state and the UL TCI state. For another instance, the second unified TCI state includes the joint TCI state, or the second unified TCI state includes the DL TCI state, or the second unified TCI state includes the UL TCI state, or the second unified TCI state includes the DL TCI state and the UL TCI state.

In some examples, the method of this embodiment may further include: the network device sending second configuration information, in which the second configuration information may indicate the first failure detection resource set and the second failure detection resource set.

In some examples, the first failure detection resource set may include one or more reference signal resource corresponding to the first unified TCI state, and the second failure detection resource set may include one or more reference signal resource corresponding to the second unified TCI state. The reference signal resource may be the reference signal resource corresponding to QCL Type D indicated by the TCI state. For instance, in the M-TRP scenario of M-DCI, the first failure detection resource set and the second failure detection resource set may be determined based on the first unified TCI state and the second unified TCI state respectively.

In some examples, the target channel may include at least one of:
a PDCCH; a PDSCH; a PUSCH; or a PUCCH.

The target reference signal may include at least one of:
a DMRS of a PDCCH; a DMRS of a PDSCH; a DMRS of a PUSCH; a DMRS of a PUCCH; an SRS; or a CSI-RS.

In some example, the target channel is a first channel, and/or the target reference signal is a first reference signal. The method of this embodiment further includes: the network device sending a first configuration signaling, in which the first configuration signaling is used to configure the first channel to be associated with at least one of a first CORESETPoolIndex or a first unified TCI state, and/or to configured the first reference signal to be associated with at least one of the first CORESETPoolIndex or the first unified TCI state.

In some example, the target channel is a second channel, and/or the target reference signal is a second reference signal. The method of this embodiment further includes: the network device sending a second configuration signaling, in which the second configuration signaling is used to configure the second channel to be associated with at least one of a second CORESETPoolIndex or a second unified TCI state, and/or to configured the second reference signal to be associated with at least one of the second CORESETPoolIndex or the second unified TCI state.

In some example, the target reference signal is a first CSI-RS or a first SRS, and the first CSI-RS or the first SRS is configured to use neither the first unified TCI state nor the second unified TCI state. The method of this embodiment further includes: the network device sending a third configuration signaling, in which the third configuration signaling is used to configure the first CSI-RS or the first SRS to be associated with at least one of a first CORESETPoolIndex, a first failure detection resource set, or the first candidate beam reference signal set.

In some example, the target reference signal is a second CSI-RS or a second SRS, and the second CSI-RS or the second SRS is configured to use neither the first unified TCI state nor the second unified TCI state. The method of this embodiment further includes: the network device sending a fourth configuration signaling, in which the fourth configuration signaling is used to configure the second CSI-RS or the second SRS to be associated with at least one of a second CORESETPoolIndex, a second failure detection resource set, or the second candidate beam reference signal set.

In some example, the method of this embodiment further includes: the network receiving a scheduling request for BFR; and/or, receiving a PUSCH, in which the PUSCH carries an UL MAC CE, and the UL MAC CE indicates the qnew and at least one of:
an ID of a first failure detection resource set; an ID of the first candidate beam reference signal set; a first CORESETPoolIndex; an ID of a second failure detection resource set; an ID of the second candidate beam reference signal set; or a second CORESETPoolIndex.

It should be noted that for the specific processing solution of the aforementioned link recovery, reference may be made to the corresponding descriptions in FIG. 2 and FIG. 3, and details will not be repeated herein.

By applying the link recovery method provided in this embodiment, in the case of M-TRP, the terminal may determine at least one target qnew based on a plurality of candidate beam reference signal sets and determine that the target channel and/or the reference signal adopts the qnew. It may be determined that channels (the PDSCH, the PUCCH and the PUSCH)/signals (the DMRS of the PDSCH, the DMRS of the PUCCH, the DMRS of the PUSCH, the CSI-RS, and the SRS) other than the CORESET (corresponding to the PDCCH and the DMRS of the PDCCH) adopt the qnew, which may improve a success rate of TRP-based BFR.

In the embodiments provided by the disclosure above, the methods provided by the embodiments of the disclosure are introduced respectively from the perspectives of the terminal and the network device. To implement each function in the methods provided by the embodiments of the disclosure, the terminal and the network device may include hardware structures and software modules, and the aforementioned functions may be implemented in the form of hardware structures, software modules, or a combination of hardware structures and software modules. A certain function among the aforementioned functions may be executed by means of a hardware structure, a software module, or a combination of a hardware structure and a software module.

Corresponding to the link recovery methods provided by the several embodiments above, the disclosure further provides a link recovery apparatus. Since the link recovery apparatus provided by the embodiment of the disclosure corresponds to the link recovery methods provided by the several embodiments above, the implementation manners of the link recovery methods are also applicable to the link recovery apparatus provided by this embodiment, which will not be described in detail in this embodiment.

FIG. 5 is a schematic diagram of a link recovery apparatus provided by an embodiment of the disclosure, and the link recovery apparatus may be applied on the terminal side.

As shown in FIG. 5, the apparatus may include: a first communication module 51 configured to determine at least one qnew from a first candidate beam reference signal set and a second candidate beam reference signal set, in which the at least one qnew indicates to use a beam corresponding to the at least one qnew for transmission; and determine a qnew corresponding to a target channel and/or a qnew corresponding to a target reference signal.

In some embodiments, the first communication module 51 is configured to receive first configuration information, in which the first configuration information is used to configure the first candidate beam reference signal set and the second candidate beam reference signal set, and the first candidate beam reference signal set corresponds to a first failure detection resource set, and the second candidate beam reference signal set corresponds to a second failure detection resource set.

In some embodiments, the first communication module 51 is further configured to receive indication information, in which the indication information is used to determine a first unified TCI state and a second unified TCI state.

In some embodiments, at least one of the first unified TCI state or the second unified TCI state includes at least one of:
a joint TCI state; a DL TCI state; or an UL TCI state.

In some embodiments, the first communication module 51 is further configured to determine the first failure detection resource set and the second failure detection resource set based on at least one of:
receiving second configuration information, in which the second configuration information indicates the first failure detection resource set and the second failure detection resource set; or determining the first failure detection resource set based on a TCI state of a CORESET corresponding to a first CORESETPoolIndex, and determining the second failure detection resource set based on a TCI state of a CORESET corresponding to a second CORESETPoolIndex, in which at least two CORESETs are configured with different CORESETPoolIndexes.

In some embodiments, the first failure detection resource set includes a reference signal resource corresponding to the first unified TCI state, and the second failure detection resource set includes a reference signal resource corresponding to the second unified TCI state.

In some embodiments, the first communication module 51 is further configured to at least one of:
in a case where a radio link quality corresponding to the first failure detection resource set is less than a Qout, and an L1-RSRP of at least one first candidate reference signal in the first candidate beam reference signal set is greater than a Qin, determine a first qnew indicating the at least one first candidate reference signal; or in a case where a radio link quality corresponding to the second failure detection resource set is less than a Qout, and an L1 -RSRP of at least one second candidate reference signal in the second candidate beam reference signal set is greater than a Qin, determine a second qnew indicating the at least one second candidate reference signal.

In some embodiments, the target channel includes at least one of:
a PDCCH; a PDSCH; a PUSCH; or a PUCCH.

The target reference signal includes at least one of:
a DMRS of a PDCCH; a DMRS of a PDSCH; a DMRS of a PUCCH; a DMRS of a PUSCH; an SRS; or a CSI-R.

In some embodiments, the first communication module 51 is further configured to determine, according to a configuration signaling or a preset rule, the qnew corresponding to the target channel and/or the qnew corresponding to the target reference signal.

In some embodiments, the first communication module 51 is further configured to:
in a case of the target channel being a first PDCCH and determining that the CORESET to which the first PDCCH belongs corresponds to the first CORESETPoolIndex or to the first unified TCI state, determine that the qnew corresponding to the first PDCCH is the first qnew, in which the first qnew corresponds to the first unified TCI state or the first CORESETPoolIndex;
in a case of the target channel being a second PDCCH and determining that the CORESET to which the second PDCCH belongs corresponds to the second CORESETPoolIndex or to the second unified TCI state, determine that the qnew corresponding to the second PDCCH is the second qnew, in which the second qnew corresponds to the second unified TCI state or the second CORESETPoolIndex;
in a case where the target channel is a first channel and/or the target reference signal is a first reference signal, and the first channel and/or the first reference signal is scheduled by first DCI carried in a first PDCCH, determine, based on a fact that the CORESET to which the first PDCCH belongs corresponds to the first CORESETPoolIndex or to the first unified TCI state, that the qnew corresponding to the first channel is the first qnew, and/or that the qnew corresponding to the first reference signal is the first qnew, in which the first qnew corresponds to the first unified TCI state or the first CORESETPoolIndex; and
in a case where the target channel is a second channel and/or the target reference signal is a second reference signal, and the second channel and/or the second reference signal is scheduled by second DCI carried in a second PDCCH, determine, based on a fact that the CORESET to which the second PDCCH belongs corresponds to the second CORESETPoolIndex or to the second unified TCI state, that the qnew corresponding to the second channel is the second qnew, and/or that the qnew corresponding to the second reference signal is the second qnew, in which the second qnew corresponds to the second unified TCI state or the second CORESETPoolIndex.

In some embodiments, the first communication module 51 is further configured to: in a case where the target channel is a first channel and/or the target reference signal is a first reference signal, receive a first configuration signaling, in which the first configuration signaling is used to determine that the first channel and/or the first reference signal adopts the first qnew; and in a case where the target channel is a second channel and/or the target reference signal is a second reference signal, receive a second configuration signaling, in which the second configuration signaling is used to determine that the second channel and/or the second reference signal adopts the second qnew.

In some embodiments, the first communication module 51 is further configured to: determine, based on the qnew, a pathloss during transmission of the target channel and/or a pathloss during transmission of the target reference signal, in which the target channel includes at least one of:
a PUCCH; or a PUSCH.

The target reference signal includes at least one of:
a DMRS of a PUCCH; a DMRS of a PUSCH; or an SRS.

In some embodiments, the first communication module 51 is further configured to: in a case where the target reference signal is a first CSI-RS or a first SRS, and the first CSI-RS or the first SRS is configured to use neither the first unified TCI state nor the second unified TCI state, receive third RRC configuration signaling, in which the third RRC configuration signaling is used to determine that the qnew corresponding to the first CSI-RS or the qnew corresponding to the first SRS is the first qnew; and in a case where the target reference signal is a second CSI-RS or a second SRS, and the second CSI-RS or the second SRS is configured to use neither the first unified TCI state nor the second unified TCI state, receive a fourth RRC configuration signaling, in which the fourth RRC configuration signaling is used to determine that the qnew corresponding to the second CSI-RS or the qnew corresponding to the second SRS is the second qnew.

In some embodiments, the first communication module 51 is further configured to: send a scheduling request for BFR; and/or, send a PUSCH, in which the PUSCH carries an UL MAC CE, and the UL MAC CE indicates the qnew and at least one of:
an ID of the first failure detection resource set; an ID of the first candidate beam reference signal set; the first CORESETPoolIndex; an ID of the second failure detection resource set; an ID of the second candidate beam reference signal set; or the second CORESETPoolIndex.

In some embodiments, the indication information includes a MAC CE, and at least one unified TCI state indicated by the MAC CE corresponds to one code point indicated by a TCI state indication field carried in DCI.

In some embodiments, the indication information includes a MAC CE and DCI, in which the MAC CE indicates at least one unified TCI state respectively corresponding to a plurality of code points corresponding to a TCI state indication field carried in the DCI, and the TCI state indication field carried in the DCI indicates one code point among the plurality of code points.

This embodiment provides a technical solution in which, in the case of M-TRP, the terminal may determine at least one target qnew based on a plurality of candidate beam reference signal sets and determine that the target channel and/or the reference signal adopts the qnew. It may be determined that channels (the PDSCH, the PUCCH and the PUSCH)/signals (the DMRS of the PDSCH, the DMRS of the PUCCH, the DMRS of the PUSCH, the CSI-RS, and the SRS) other than the CORESET (corresponding to the PDCCH and the DMRS of the PDCCH) adopt the qnew, which may improve a success rate of TRP-based BFR.

FIG. 6 is a schematic diagram of a link recovery apparatus provided by an embodiment of the disclosure, and the link recovery apparatus may be applied on the network device side.

As shown in FIG. 6, the apparatus may include: a second communication module 61 configured to receiving a qnew sent by a terminal, in which the qnew is determined by the terminal from a first candidate beam reference signal set and a second candidate beam reference signal set and corresponds to a target channel and/or a target reference signal, and the qnew indicates to use a beam corresponding to the qnew for transmission.

In some embodiments, the second communication module 61 is further configured to send first configuration information, in which the first configuration information is used to configure the first candidate beam reference signal set and the second candidate beam reference signal set, and the first candidate beam reference signal set corresponds to a first failure detection resource set, and the second candidate beam reference signal set corresponds to a second failure detection resource set.

In some embodiments, the second communication module 61 is further configured to send indication information, in which the indication information is used for the terminal to determine a first unified TCI state and a second unified TCI state.

In some embodiments, the indication information includes a MAC CE, and at least one unified TCI state indicated by the MAC CE corresponds to one code point indicated by a TCI state indication field carried in DCI.

In some embodiments, the indication information includes a MAC CE and DCI, in which the MAC CE indicates at least one unified TCI state respectively corresponding to a plurality of code points corresponding to a TCI state indication field carried in the DCI, and the TCI state indication field carried in the DCI indicates one code point among the plurality of code points.

In some embodiments, at least one of the first unified TCI state or the second unified TCI state includes at least one of:
a joint TCI state; a DL TCI state; or an UL TCI state.

In some embodiments, the second communication module 61 is further configured to send second configuration information, in which the second configuration information indicates the first failure detection resource set and the second failure detection resource set.

In some embodiments, the first failure detection resource set includes a reference signal resource corresponding to the first unified TCI state, and the second failure detection resource set includes a reference signal resource corresponding to the second unified TCI state.

In some embodiments, the target channel includes at least one of:
a PDCCH; a PDSCH; a PUSCH; or a PUCCH.

The target reference signal includes at least one of:
a DMRS of a PDCCH; a DMRS of a PDSCH; a DMRS of a PUCCH; a DMRS of a PUSCH; an SRS; or a CSI-R.

In some embodiments, the target channel is a first channel, and/or the target reference signal is a first reference signal. The second communication module 61 is further configured to send a first configuration signaling, in which the first configuration signaling is used to configure the first channel to be associated with at least one of a first CORESETPoolIndex or a first unified TCI state, and/or to configured the first reference signal to be associated with at least one of the first CORESETPoolIndex or the first unified TCI state.

In some embodiments, the target channel is a second channel, and/or the target reference signal is a second reference signal. The second communication module 61 is further configured to send a second configuration signaling, in which the second configuration signaling is used to configure the second channel to be associated with at least one of a second CORESETPoolIndex or a second unified TCI state, and/or to configured the second reference signal to be associated with at least one of the second CORESETPoolIndex or the second unified TCI state.

In some embodiments, the target reference signal is a first CSI-RS or a first SRS, and the first CSI-RS or the first SRS is configured to use neither the first unified TCI state nor the second unified TCI state. The second communication module 61 is further configured to send a third configuration signaling, in which the third configuration signaling is used to configure the first CSI-RS or the first SRS to be associated with at least one of a first CORESETPoolIndex, a first failure detection resource set, or the first candidate beam reference signal set.

In some embodiments, the target reference signal is a second CSI-RS or a second SRS, and the second CSI-RS or the second SRS is configured to use neither the first unified TCI state nor the second unified TCI state. The second communication module 61 is further configured to send a fourth configuration signaling, in which the fourth configuration signaling is used to configure the second CSI-RS or the second SRS to be associated with at least one of a second CORESETPoolIndex, a second failure detection resource set, or the second candidate beam reference signal set.

In some embodiments, the second communication module 61 is further configured to receive a scheduling request for BFR; and/or, receive a PUSCH, in which the PUSCH carries an UL MAC CE, and the UL MAC CE indicates the qnew and at least one of:
an ID of a first failure detection resource set; an ID of the first candidate beam reference signal set; a first CORESETPoolIndex; an ID of a second failure detection resource set; an ID of the second candidate beam reference signal set; or a second CORESETPoolIndex.

This embodiment provides a technical solution in which, in the case of M-TRP, the terminal may determine at least one target qnew based on a plurality of candidate beam reference signal sets and determine that the target channel and/or the reference signal adopts the qnew. It may be determined that channels (the PDSCH, the PUCCH and the PUSCH)/signals (the DMRS of the PDSCH, the DMRS of the PUCCH, the DMRS of the PUSCH, the CSI-RS, and the SRS) other than the CORESET (corresponding to the PDCCH and the DMRS of the PDCCH) adopt the qnew, which may improve a success rate of TRP-based BFR.

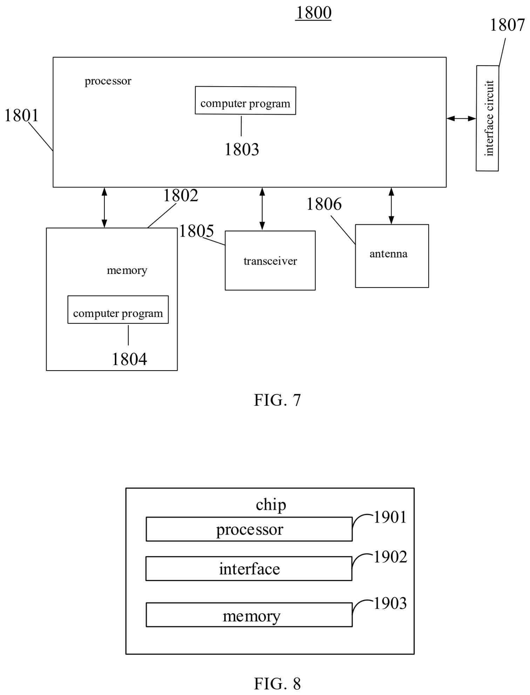

FIG. 7 is a schematic diagram of a communication apparatus 1800 provided by an embodiment. The communication apparatus 1800 may be a network device or a UE, or a chip, a chip system or a processor that supports the network device to realize the above-described method, or a chip, a chip system or a processor that supports the UE to realize the above-described method. The apparatus may be used to realize the methods described in the above method embodiments with reference to the descriptions of the above-described method embodiments.

The communication apparatus 1800 may include one or more processors 1801. The processor 1801 may be a general purpose processor or a dedicated processor, such as, a baseband processor or a central processor. The baseband processor is used for processing communication protocols and communication data, and the central processor is used for controlling the communication apparatus (e.g., base station, baseband chip, terminal, terminal chip, central unit (CU) or distributed unit (DU)), executing computer programs, and processing data of the computer programs.

In some embodiments of the disclosure, the communication apparatus 1800 may further include one or more memories 1802 on which a computer program 1804 is stored. When the processor 1801 executes the computer program 1804, the communication apparatus 1800 is caused to perform the methods described in the above method embodiments. In an embodiment of the disclosure, data may also be stored in the memory 1802. The communication apparatus 1800 and the memory 1802 may be provided separately or integrated together.

In some embodiments of the disclosure, the communication apparatus 1800 may also include a transceiver 1805 and an antenna 1806. The transceiver 1805 may be referred to as transceiver unit, transceiver machine or transceiver circuit, for realizing a transceiver function. The transceiver 1805 may include a receiver and a transmitter. The receiver may be referred to as receiver machine or receiving circuit, for realizing a receiving function. The transmitter may be referred to as transmitter machine or transmitting circuit, for realizing a transmitting function.

In some embodiments of the disclosure, the communication apparatus 1800 may also include one or more interface circuits 1807. The interface circuits 1807 are used to receive code instructions and transmit them to the processor 1801. The processor 1801 runs the code instructions to cause the communication apparatus 1800 to perform the methods described in the method embodiments.

In an implementation, the processor 1801 may include a transceiver for implementing the receiving and transmitting functions. The transceiver may be, for example, a transceiver circuit, an interface or an interface circuit. The transceiver circuit, interface or interface circuit for implementing the receiving and transmitting functions may be separated or integrated together. The transceiver circuit, interface or interface circuit described above may be used for code/data reading and writing or may be used for signal transmission or delivery.

In an implementation, the processor 1801 may store a computer program 1803 that may be executed by the processor 1801 and may cause the communication apparatus 1800 to perform the methods described in the method embodiments above. The computer program 1803 may be solidified in the processor 1801, in which case the processor 1801 may be implemented by hardware.

In an implementation, the communication apparatus 1800 may include circuits. The circuits may implement the sending, receiving or communicating function in the preceding method embodiments. The processor and the transceiver described in the disclosure may be implemented on integrated circuits (ICs), analog ICs, radio frequency integrated circuits (RFICs), mixed signal ICs, application specific integrated circuits (ASICs), printed circuit boards (PCBs), and electronic devices. The processor and the transceiver can also be produced using various IC process technologies, such as complementary metal oxide semiconductor (CMOS), nMetal-oxide-semiconductor (NMOS), positive channel metal oxide semiconductor (PMOS), bipolar junction transistor (BJT), bipolar CMOS (BiCMOS), silicon-germanium (SiGe), gallium arsenide (GaAs) and so on.

The communication apparatus in the descriptions of the above embodiments may be a network device or a UE, but the scope of the communication apparatus described in the disclosure is not limited thereto, and the structure of the communication apparatus may not be limited by FIG. 7. The communication apparatus may be a stand-alone device or may be part of a larger device. For example, the communication apparatus may be:
(1) a stand-alone IC, chip, chip system or subsystem;
(2) a collection of ICs including one or more ICs, in an embodiment of the disclosure, the collection of ICs may also include storage components for storing data and computer programs;
(3) an ASIC, such as a modem;
(4) modules that may be embedded within other devices;
(5) receivers, terminals, smart terminals, cellular phones, wireless devices, handheld machines, mobile units, in-vehicle devices, network devices, cloud devices, artificial intelligence devices, and the like; and
(6) others.

For the case where the communication apparatus may be a chip or a chip system, reference may be made to the schematic diagram of the chip shown in FIG. 8. The chip shown in FIG. 8 includes a processor 1901 and an interface 1902. There may be one or more processors 1901, and there may be a plurality of interfaces 1902.

In an embodiment of the disclosure, the chip further includes a memory 1903, and the memory 1903 is configured to store necessary computer programs and data.

It is understandable by those skilled in the art that various illustrative logical blocks and steps listed in the embodiments of the disclosure may be implemented by electronic hardware, computer software, or a combination of both. Whether such function is implemented by hardware or software depends on the particular application and the design requirements of the entire system. Those skilled in the art may, for each particular application, use various methods to implement the described function, but such implementation should not be construed as being beyond the scope of protection of the embodiments of the disclosure.

The disclosure also provides a readable storage medium having an instruction stored thereon. When the instruction is executed by a computer, the function of any of the method embodiments described above is implemented.

The disclosure also provides a computer program product. When the computer program product is executed by a computer, the function of any of the method embodiments described above is implemented.

The above embodiments may be implemented in whole or in part by software, hardware, firmware, or any combination thereof. When implemented using software, it may be implemented, in whole or in part, in the form of a computer program product. The computer program product includes one or more computer programs. When loading and executing the computer program on the computer, all or part of processes or functions described in the embodiments of the disclosure are implemented. The computer may be a general-purpose computer, a dedicated computer, a computer network, or other programmable devices. The computer program may be stored in a computer readable storage medium or transmitted from one computer readable storage medium to another computer readable storage medium. For example, the computer program may be transmitted from one web site, computer, server or data center to another web site, computer, server or data center, in a wired manner (e.g., by using coaxial cables, fiber optics or digital subscriber lines (DSLs) or wirelessly (e.g., by using infrared wave, wireless wave or microwave). The computer readable storage medium may be any usable medium to which the computer has access or a data storage device integrated by one or more usable mediums such as a server and a data center. The usable medium may be a magnetic medium (e.g., floppy disk, hard disk, and tape), an optical medium (e.g., a high-density digital video disc (DVD)), or a semiconductor medium (e.g., a solid state disk (SSD)).

Those skilled in the art understand that "first", "second" and other various numerical numbers involved in the disclosure are only described for the convenience of differentiation, and are not used to limit the scope of the embodiments of the disclosure, or indicate the order of precedence.

The term "at least one" in the disclosure may also be described as one or more, and the term "multiple" may be two, three, four or more, which is not limited in the disclosure. In the embodiment of the disclosure, for a type of technical features, "first", "second" and "third", and "A", "B", "C" and "D" are used to distinguish different technical features of the type, the technical features described using the "first", "second" and "third", and "A", "B", "C" and "D" do not indicate any order of precedence or magnitude.

As used herein, the terms "machine readable medium" and "computer readable medium" refer to any computer program product, apparatus and/or device (e.g., disk, optical disk, memory, programmable logic device (PLD)) for providing machine instructions and/or data to a programmable processor, including machine readable mediums that receive machine instructions as machine readable signals. The term "machine-readable signal" refers to any signal used to provide machine instructions and/or data to a programmable processor.

The systems and technologies described herein may be implemented in a computing system that includes back-end components (for example, a data server), or a computing system that includes middleware components (for example, an application server), or a computing system that includes front-end components (for example, a user computer with a graphical user interface or a web browser, through which the user can interact with the implementation of the systems and technologies described herein), or a computing system that includes any combination of the back-end components, the middleware components and the front-end components. The components of the system may be interconnected by any form or medium of digital data communication (e.g., a communication network). Examples of communication networks include: a Local Area Network (LAN), a Wide Area Network (WAN), and the Internet.

The computer system may include a client and a server. The client and the server are generally remote from each other and interacting through a communication network. The client-server relation is generated by computer programs running on the respective computers and having a client-server relation with each other.

It is understandable that the steps may be reordered, added or deleted using various forms of the processes shown above. For example, the steps in the disclosure may be performed in parallel, sequentially or in different orders, as long as the desired results of the technical solutions disclosed in the disclosure are achieved, which are not limited herein.

In addition, it should be understood that the embodiments described in the disclosure may be implemented separately or in combination with other embodiments if the solution permits.

Those skilled in the art may realize that the units and algorithmic steps of the examples described in combination with the embodiments disclosed herein are capable of being implemented in the form of electronic hardware, or a combination of computer software and electronic hardware. Whether these functions are performed in the form of hardware or software depends on the specific application and design constraints of the technical solution. Those skilled in the art may use different methods to implement the described functions for each particular application, but such implementations should not be considered as beyond the scope of the disclosure.

It is clearly understood by those skilled in the field to which it belongs that, for the convenience and brevity of description, the specific working processes of the systems, apparatuses, and units described above may be referred to the corresponding processes in the preceding method embodiments, and will not be repeated herein.

The above are only specific implementations of the disclosure, but the scope of protection of the disclosure is not limited thereto. Those skilled in the art familiar to the technical field may easily think of changes or substitutions in the technical scope disclosed by the disclosure, which shall be covered by the scope of protection of the disclosure. Therefore, the scope of protection of the disclosure shall be governed by the scope of protection of the attached claims.

## Claims

1. A link recovery method, performed by a terminal, comprising:
determining at least one reference signal identifier (qnew) from a first candidate beam reference signal set and a second candidate beam reference signal set, wherein the at least one qnew indicates to use a beam corresponding to the at least one qnew for transmission; and
determining a qnew corresponding to a target channel and/or a qnew corresponding to a target reference signal.

2. The link recovery method of claim 1, further comprising:
receiving first configuration information, wherein the first configuration information is used to configure the first candidate beam reference signal set and the second candidate beam reference signal set, wherein the first candidate beam reference signal set corresponds to a first failure detection resource set, and the second candidate beam reference signal set corresponds to a secon d failure detection resource set.

3. The link recovery method of claim 1 or 2, further comprising:
receiving indication information, wherein the indication information is used to determine a first unified transmission configuration indication (TCI) state and a second unified TCI state.

4. The link recovery method of claim 3, wherein at least one of the first unified TCI state or the second unified TCI state comprises at least one of:
a joint TCI state;
a downlink (DL) TCI state; or
an uplink (UL) TCI state.

5. The link recovery method of claim 3 or 4, further comprising: determining the first failure detection resource set and the second failure detection resource set based on at least one of:
receiving second configuration information, wherein the second configuration information indicates the first failure detection resource set and the second failure detection resource set; or
determining the first failure detection resource set based on a TCI state of a control resource set (CORESET) corresponding to a first CORESET pool index (CORESETPoolIndex), and determining the second failure detection resource set based on a TCI state of a CORESET corresponding to a second CORESETPoolIndex, wherein at least two CORESETs are configured with different CORESETPoolIndexes.

6. The link recovery method of claim 3 or 5, wherein the first failure detection resource set comprises a reference signal resource corresponding to the first unified TCI state, and the second failure detection resource set comprises a reference signal resource corresponding to the second unified TCI state.

7. The link recovery method of claim 5, wherein determining at least one qnew from the first candidate beam reference signal set and the second candidate beam reference signal set comprises at least one of:
in a case where a radio link quality corresponding to the first failure detection resource set is less than an out-of-sync threshold (Qout), and a layer 1 reference signal received power (L1 - RSRP) of at least one first candidate reference signal in the first candidate beam reference signal set is greater than an in-sync threshold (Qin), determining a first qnew indicating the at least one first candidate reference signal; or
in a case where a radio link quality corresponding to the second failure detection resource set is less than a Qout, and an L1-RSRP of at least one second candidate reference signal in the second candidate beam reference signal set is greater than a Qin, determining a second qnew indicating the at least one second candidate reference signal.

8. The link recovery method of claim 7, wherein the target channel comprises at least one of:
a physical downlink control channel (PDCCH);
a physical downlink shared channel (PDSCH);
a physical uplink shared channel (PUSCH); or
a physical uplink control channel (PUCCH); and
wherein the target reference signal comprises at least one of:
a demodulation reference signal (DMRS) of a PDCCH;
a DMRS of a PDSCH;
a DMRS of a PUCCH;
a DMRS of a PUSCH;
a sounding reference signal (SRS); or
a channel state information reference signal (CSI-RS).

9. The link recovery method of claim 8, wherein determining the qnew corresponding to the target channel and/or the qnew corresponding to the target reference signal comprises:
determining, according to a configuration signaling or a preset rule, the qnew corresponding to the target channel and/or the qnew corresponding to the target reference signal.

10. The link recovery method of claim 9, wherein determining, according to the preset rule, the qnew corresponding to the target channel and/or the qnew corresponding to the target reference signal comprises:
in a case of the target channel being a first PDCCH and determining that the CORESET to which the first PDCCH belongs corresponds to the first CORESETPoolIndex or to the first unified TCI state, determining that the qnew corresponding to the first PDCCH is the first qnew, wherein the first qnew corresponds to the first unified TCI state or the first CORESETPoolIndex;
in a case of the target channel being a second PDCCH and determining that the CORESET to which the second PDCCH belongs corresponds to the second CORESETPoolIndex or to the second unified TCI state, determining that the qnew corresponding to the second PDCCH is the second qnew, wherein the second qnew corresponds to the second unified TCI state or the second CORESETPoolIndex;
in a case where the target channel is a first channel and/or the target reference signal is a first reference signal, and the first channel and/or the first reference signal is scheduled by first downlink control information (DCI) carried in a first PDCCH, determining, based on a fact that the CORESET to which the first PDCCH belongs corresponds to the first CORESETPoolIndex or to the first unified TCI state, that the qnew corresponding to the first channel is the first qnew, and/or that the qnew corresponding to the first reference signal is the first qnew, wherein the first qnew corresponds to the first unified TCI state or the first CORESETPoolIndex; and
in a case where the target channel is a second channel and/or the target reference signal is a second reference signal, and the second channel and/or the second reference signal is scheduled by second DCI carried in a second PDCCH, determining, based on a fact that the CORESET to which the second PDCCH belongs corresponds to the second CORESETPoolIndex or to the second unified TCI state, that the qnew corresponding to the second channel is the second qnew, and/or that the qnew corresponding to the second reference signal is the second qnew, wherein the second qnew corresponds to the second unified TCI state or the second CORESETPoolIndex.

11. The link recovery method of claim 9, wherein determining, according to the configuration signaling, the qnew corresponding to the target channel and/or the qnew corresponding to the target reference signal comprises:
in a case where the target channel is a first channel and/or the target reference signal is a first reference signal, receiving a first configuration signaling, wherein the first configuration signaling is used to determine that the first channel and/or the first reference signal adopts the first qnew; and
in a case where the target channel is a second channel and/or the target reference signal is a second reference signal, receiving a second configuration signaling, wherein the second configuration signaling is used to determine that the second channel and/or the second reference signal adopts the second qnew.

12. The link recovery method of claim 9, wherein determining the qnew corresponding to the target reference signal according to configuration signaling comprises:
in a case where the target reference signal is a first CSI-RS or a first SRS, and the first CSI-RS or the first SRS is configured to use neither the first unified TCI state nor the second unified TCI state, receiving third radio resource control (RRC) configuration signaling, wherein the third RRC configuration signaling is used to determine that the qnew corresponding to the first CSI-RS or the qnew corresponding to the first SRS is the first qnew; and
in a case where the target reference signal is a second CSI-RS or a second SRS, and the second CSI-RS or the second SRS is configured to use neither the first unified TCI state nor the second unified TCI state, receiving a fourth RRC configuration signaling, wherein the fourth RRC configuration signaling is used to determine that the qnew corresponding to the second CSI-RS or the qnew corresponding to the second SRS is the second qnew.

13. The link recovery method of claim 7, further comprising:
determining, based on the qnew, a pathloss during transmission of the target channel and/or a pathloss during transmission of the target reference signal,
wherein the target channel comprises at least one of:
a PUCCH; or
a PUSCH; and
wherein the target reference signal comprises at least one of:
a DMRS of a PUCCH;
a DMRS of a PUSCH; or
an SRS.

14. The link recovery method of claim 5, further comprising:
sending a scheduling request for beam failure recovery (BFR); and/or,
sending a PUSCH, wherein the PUSCH carries an uplink medium access control element (UL MAC CE), and the UL MAC CE indicates the qnew and at least one of:
an identifier (ID) of the first failure detection resource set;
an ID of the first candidate beam reference signal set;
the first CORESETPoolIndex;
an ID of the second failure detection resource set;
an ID of the second candidate beam reference signal set; or
the second CORESETPoolIndex.

15. The link recovery method of claim 3, wherein the indication information comprises a MAC CE, and at least one unified TCI state indicated by the MAC CE corresponds to one code point indicated by a TCI state indication field carried in DCI.

16. The link recovery method of claim 3, wherein the indication information comprises a MAC CE and DCI, wherein the MAC CE indicates at least one unified TCI state respectively corresponding to a plurality of code points corresponding to a TCI state indication field carried in the DCI, and the TCI state indication field carried in the DCI indicates one code point among the plurality of code points.

17. A link recovery method, performed by a network device, comprising:
receiving a reference signal identifier (qnew) sent by a terminal, wherein the qnew is determined by the terminal from a first candidate beam reference signal set and a second candidate beam reference signal set and corresponds to a target channel and/or a target reference signal, and the qnew indicates to use a beam corresponding to the qnew for transmission.

18. The link recovery method of claim 17, further comprising:
sending first configuration information, wherein the first configuration information is used to configure the first candidate beam reference signal set and the second candidate beam reference signal set, wherein the first candidate beam reference signal set corresponds to a first failure detection resource set, and the second candidate beam reference signal set corresponds to a second failure detection resource set.

19. The link recovery method of claim 17 or 18, further comprising:
sending indication information, wherein the indication information is used for the terminal to determine a first unified transmission configuration indication (TCI) state and a second unified TCI state.

20. The link recovery method of claim 19, wherein the indication information comprises a medium access control element (MAC CE), and at least one unified TCI state indicated by the MAC CE corresponds to one code point indicated by a TCI state indication field carried in downlink control information (DCI).

21. The link recovery method of claim 19, wherein the indication information comprises a MAC CE and DCI, wherein the MAC CE indicates at least one unified TCI state respectively corresponding to a plurality of code points corresponding to a TCI state indication field carried in the DCI, and the TCI state indication field carried in the DCI indicates one code point among the plurality of code points.

22. The link recovery method of claim 19, wherein at least one of the first unified TCI state or the second unified TCI state comprises at least one of:
a joint TCI state;
a downlink (DL) TCI state; or
an uplink (UL) TCI state.

23. The link recovery method of claim 19, further comprising:
sending second configuration information, wherein the second configuration information indicates the first failure detection resource set and the second failure detection resource set.

24. The link recovery method of claim 19, wherein the first failure detection resource set comprises a reference signal resource corresponding to the first unified TCI state, and the second failure detection resource set comprises a reference signal resource corresponding to the second unified TCI state.

25. The link recovery method of claim 17, wherein the target channel comprises at least one of:
a physical downlink control channel (PDCCH);
a physical downlink shared channel (PDSCH);
a physical uplink shared channel (PUSCH); or
a physical uplink control channel (PUCCH); and
wherein the target reference signal comprises at least one of:
a demodulation reference signal (DMRS) of a PDCCH;
a DMRS of a PDSCH;
a DMRS of a PUCCH;
a DMRS of a PUSCH;
a sounding reference signal (SRS); or
a channel state information reference signal (CSI-RS).

26. The link recovery method of claim 17, wherein the target channel is a first channel, and/or the target reference signal is a first reference signal, and the method further comprises:
sending a first configuration signaling, wherein the first configuration signaling is used to configure the first channel to be associated with at least one of a first control resource set pool index (CORESETPoolIndex) or a first unified TCI state, and/or to configured the first reference signal to be associated with at least one of the first CORESETPoolIndex or the first unified TCI state.

27. The link recovery method of claim 17, wherein the target channel is a second channel, and/or the target reference signal is a second reference signal, and the method further comprise s:
sending a second configuration signaling, wherein the second configuration signaling is used to configure the second channel to be associated with at least one of a second CORESETPoolIndex or a second unified TCI state, and/or to configured the second reference signal to be associated with at least one of the second CORESETPoolIndex or the second unified TCI state.

28. The link recovery method of claim 17, wherein the target reference signal is a first CSI-RS or a first SRS, and the first CSI-RS or the first SRS is configured to use neither the first unified TCI state nor the second unified TCI state, and the method further comprises:
sending a third radio resource control (RRC) configuration signaling, wherein the third RRC configuration signaling is used to configure the first CSI-RS or the first SRS to be associated with at least one of a first CORESETPoolIndex, a first failure detection resource set, or the first candidate beam reference signal set.

29. The link recovery method of claim 17, wherein the target reference signal is a second CSI-RS or a second SRS, and the second CSI-RS or the second SRS is configured to use neither the first unified TCI state nor the second unified TCI state, and the method further comprises:
sending a fourth RRC configuration signaling, wherein the fourth RRC configuration signaling is used to configure the second CSI-RS or the second SRS to be associated with at least one of a second CORESETPoolIndex, a second failure detection resource set, or the second candidate beam reference signal set.

30. The link recovery method of claim 17, further comprising:
receiving a scheduling request for beam failure recovery; and/or,
receiving a PUSCH, wherein the PUSCH carries an UL MAC CE, and the UL MAC CE indicates the qnew and at least one of:
an identifier (ID) of a first failure detection resource set;
an ID of the first candidate beam reference signal set;
a first CORESETPoolIndex;
an ID of a second failure detection resource set;
an ID of the second candidate beam reference signal set; or
a second CORESETPoolIndex.

31. A link recovery apparatus, applied to a terminal, comprising:
a first communication module, configured to determine at least one reference signal identifier (qnew) from a first candidate beam reference signal set and a second candidate beam reference signal set, wherein the at least one qnew indicates to use a beam corresponding to the at least one qnew for transmission; and configured to determine a qnew corresponding to a target channel and/or a qnew corresponding to a target reference signal.

32. A link recovery apparatus, applied to a network device, comprising:
a second communication module, configured to receive a reference signal identifier (qnew) sent by a terminal, wherein the qnew is determined by the terminal from a first candidate beam reference signal set and a second candidate beam reference signal set and corresponds to a target channel and/or a target reference signal, and the qnew indicates to use a beam corresponding to the qnew for transmission.

33. A communication device, comprising: a transceiver; a memory; and a processor connected to the transceiver and the memory respectively, wherein the processor is configured to control the transceiver to transmit and receive a wireless signal by executing computer-executable instructions on the memory, and to implement the method according to any one of claims 1 to 30.

34. A computer storage medium storing computer-executable instructions which, when executed by a processor, causes the method according to any one of claims 1 to 30 to be implemented.
